# NOUVEAU FASCICULE DE BREVET EUROPEEN

(11) **EP 0 796 817 B2**
(45) Date de publication et mention de la décision concernant l'opposition: **29.03.2017**
(45) Mention de la délivrance du brevet: 08.11.2000
(21) Numéro de dépôt: 97400401.2
(22) Date de dépôt: 24.02.1997
(51) Int. Cl.: C01B 15/10

(54) **Percarbonate de sodium et son procédé d'obtention**
Natriumpercarbonat und Verfahren zu dessen Herstellung
Sodium percarbonate and process for its production

(30) Priorité: 19.03.1996 FR 9603397
(43) Date de publication de la demande: 24.09.1997
(73) Titulaire: SOLVAY SA, 1120 Bruxelles (BE)
(72) Inventeur: Bossoutrot, Jean-Michel, 69230 ST Genis Laval (FR); Garcia, François, 69530 Brignais (FR)
(74) Mandataire: Benvenuti, Federica

(56) Documents cités:
- EP-A- 0 496 430
- EP-A- 0 703 190
- WO-A1-95/23210
- DE-A1- 2 060 971
- FR-A- 2 160 251
- GB-A- 1 469 352
- JP-A- S5 849 605
- US-A- 2 986 448
- US-A- 2 986 448
- US-A- 4 416 606
- ROUSTAN M. ET AL: 'Extrapolation du pilote à l'èchelle industrielle' TECHNIQUES DE L'INGÉNIEUR no. A 5900, 1980, pages 18 - 20
- HAROLD B. ET AL: 'Perry's chemical engineers' handbook, international edition', 1984, MCGRAW-HILL BOOK CO, SINGAPORE page 19-13

## Description

La présente invention concerne un nouveau percarbonate de sodium, de formule globale Na₂CO_{3.}1,5 H₂0₂.

Le percarbonate de sodium connu à ce jour est soit :
- un monocristal en forme de prisme hexagonal de masse volumique comprise entre 0,9 et 1 g/cm3 (FR 2 318 112) soit
- un monocristal en forme de rhomboèdre régulier (FR 2 355 774) soit
- une granule creuse de masse volumique apparente voisine de 0,4 g/cm3 et de diamètre moyen voisin de 480 pm (FR 2 486 056) soit
- sous forme de grain compact de granulométrie moyenne voisine de 450 µm (BE 859 155).

II a maintenant été trouvé un percarbonate de sodium de très haute qualité, constitué de petits cristaux agglomérés. La taille de ces petits cristaux est en général comprise entre environ 1 et environ 100 µm et de préférence comprise entre environ 5 et environ 20 µm

Le percarbonate de sodium de la présente invention constitué d'agglomérats de petits cristaux de percarbonate de sodium est caractérisé par une très bonne résistance à l'attrition, avec de préférence une perte pondérale en fines inferieure a 1 % suivant le test de la norme ISO 5937 (méthode de friabilité en lit fluide).

Le percarbonate de sodium sous forme d'agglomérats selon l'invention a une masse volumique apparente supérieure à environ 0,6 g/cm3 et de préférence comprise entre environ 0,75 g/cm3 et environ 1,1 g/cm3.

Les agglomérats de percarbonate de sodium de l'invention présentent l'avantage de se dissoudre rapidement. Ainsi le temps nécessaire pour obtenir la dissolution de 90 % de 2 g d'agglomérats de percarbonate de sodium introduits dans un litre d'eau est en général inférieur ou égal à 90 secondes à 15°C et de préférence compris entre 40 et 70 secondes.

Le percarbonate de sodium conforme à l'invention est formé d'agglomérats dont la granulométrie moyenne varie avec les conditions choisies pour les fabriquer.

Ces dernières décrites plus loin, permettent d'obtenir des agglomérats dont la granulométrie peut être comprise entre des limites aussi éloignées qu'environ 160 µm et environ 1 400 µm avec une répartition granulométrique particulièrement resserrée. Par exemple, dans le cas d'agglomérats de granulométrie moyenne égale à environ 765 µm généralement au moins 85 % sont de dimension comprise entre environ 480 µm et environ 1 400 µ*m*.

Avantageusement la granulométrie moyenne de ces agglomérats est supérieure à 600 µ*m* et de préférence supérieure à 700 µ*m*.

Le taux pondéral de fines de dimension inférieure à 160 µ*m* présentes avec les agglomérats tels qu'ils résultent du procédé qui convient à leur fabrication est inférieur à 2 %, le plus souvent même inférieur à 1 %.

La teneur en oxygène actif de ces agglomérats de percarbonate de sodium est en général supérieure à 14 % et elle est définie comme étant le pourcentage massique de la quantité d'oxygène disponible rapporté aux agglomérats de percarbonate de sodium.

Le percarbonate de la présente invention peut être obtenu par est un procédé de fabrication continue de percarbonate de sodium sous forme d'agglomérats constitués de petits cristaux et ayant au moins une des caractéristiques décrites ci-dessus. Il est connu de fabriquer du percarbonate de sodium par réaction d'une solution ou d'une suspension de carbonate de sodium avec des solutions aqueuses de peroxyde d'hydrogène. L'ajout de sels inertes tels que le chlorure de sodium pour abaisser la solubilité du percarbonate de sodium est également connue.

Par ailleurs, on connait des procédés de fabrication discontinue de percarbonate de sodium (BE 859 155, FR 2 368 438). On connait également des procédés de fabrication continue de percarbonate de sodium opérant soit sous vide (FR 2 318 112) soit avec deux réacteurs en cascade (EP 496 430) et conduisant respectivement a des monocristaux et à des cristaux de percarbonate de sodium de dimension inferieure a 75 µm

Le brevet GB 1 469 352 divulgue un procédé de fabrication d'un percarbate de sodium à gros grains résistant à l'abrasion.

Le brevet US 2 986 448 suggère l'utilisation d'un cristalliseur, dans lequel une solution sursaturée est emporté par un mouvement ascendant à travers un lit de cristaux de persels en formation et en croissance, permettant ainsi de réaliser une certaine classification de particules. Toutefois, la distribution granulométrique des persels ainsi obtenus est toujours relativement étalée et leur stabilité n'est pas très élevée.

La demande de brevet européen EP 703 190 décrit un procédé continu de fabrication des persels dans un cristalliseur classificateur. Les persels sont formés dans une zone vigoureusement agitée (page 2, lignes 1 à 2).

La demanderesse a maintenant découvert un procédé de fabrication continue de percarbonate de sodium basé sur la génération et l'agglomération de petits cristaux dudit percarbonate de sodium.

Ce procédé est caractérisé en ce qu'il comprend un réacteur dans lequel un lit de petits cristaux et/ou d'agglomérats de percarbonate de sodium est maintenu en suspension par un courant ascendant d'une solution aqueuse sursaturée dudit percarbonate formé par la mise en contact d'une suspension ou solution de carbonate de sodium et d'une solution aqueuse de peroxyde d'hydrogène. L'état de saturation de la solution aqueuse va décroître tandis qu'elle se déplace selon un mouvement ascendant continu a une vitesse telle que soit assuré un classement granulométrique d'agglomérats souhaité.

Les agglomérats de percarbonate de sodium ainsi fabriqués sont retirés de la suspension dans la partie inférieure du lit.

Au terme de son déplacement ascendant, la solution aqueuse est sursaturée en percarbonate de sodium et a une concentration en percarbonate de sodium généralement comprise entre la valeur correspondant à la solubilité du percarbonate de sodium dans le même milieu, à la même température, et environ 1,6 fois cette valeur. La solution aqueuse au terme de son déplacement ascendant a, le plus souvent, une concentration en percarbonate de sodium comprise entre environ 1 et environ 1,4 fois la valeur correspondant à la solubilité du percarbonate de sodium dans le même milieu et à la même température. La quantité de matière solide présente à ce niveau du réacteur est généralement inférieure à 150 g par litre de solution aqueuse et de préférence comprise entre environ 10 et environ 25 g par litre de solution aqueuse.

Pour former Ie percarbonate de sodium destiné à assurer l'état de sursaturation de la solution aqueuse sursaturée de percarbonate de sodium, on utilise des quantités de peroxyde d'hydrogène et de carbonate de sodium telles que le rapport molaire peroxyde d'hydrogène/carbonate de sodium dissous dans les eaux-mères, au terme du déplacement ascendant de la solution aqueuse sursaturée, soit supérieur à 1 et de préférence compris entre environ 1,2 et environ 1,6.

L'apport de percarbonate de sodium en solution aqueuse assurant cet état de sursaturation peut être réalise par formation dudit percarbonate au sein même de la solution aqueuse sursaturée de percarbonate ou extérieurement à celle-ci. La formation de percarbonate de sodium au sein de la solution aqueuse sursaturée de percarbonate de sodium est particulièrement préférée et elle est réalisée par l'introduction en continue d'une solution aqueuse de peroxyde d'hydrogène et d'une suspension ou solution de carbonate de sodium, contenant éventuellement du percarbonate de sodium en solution ou suspension. De préférence on introduit la solution aqueuse de peroxyde d'hydrogène, sur le trajet ascensionnel de la solution aqueuse sursaturée de percarbonate de sodium à un niveau très proche de celui de l'introduction de la suspension ou solution de carbonate de sodium. Les introductions de la solution aqueuse du peroxyde d'hydrogène et de la suspension ou solution de carbonate de sodium peuvent également avoir lieu à plusieurs niveaux.

Avantageusement, on introduit la suspension ou solution de carbonate de sodium dans la zone comprise entre le niveau situé à la limite supérieure du soutirage des agglomérats et le niveau situé à environ mi-parcours du trajet ascendant de la solution sursaturée de percarbonate de sodium.

L'état de sursaturation de la solution aqueuse de percarbonate de sodium dans la zone d'introduction de la solution de peroxyde d'hydrogène et de la suspension ou solution de carbonate de sodium est normalement supérieur a 1,2 fois la valeur de la solubilité du percarbonate de sodium dans ce même milieu et a la même température. Il est de préférence compris entre environ 1,3 et environ 6 fois cette valeur.

La génération des cristaux et/ou des agglomérats de percarbonate de sodium peut être réalisée en présence d'agents de cristallisation. Ces agents peuvent être introduits à un ou plusieurs niveaux(x) sur le trajet ascensionnel de la solution aqueuse sursaturée de percarbonate de sodium. Ces niveaux se situent de préférence dans la zone d'introduction de la solution aqueuse de peroxyde d'hydrogène et de la suspension ou solution de carbonate de sodium et/ou au-dessus de cette zone. Parmi les agents de cristallisation, l'hexamétaphosphate de sodium est particulièrement préféré. On utilise en général une quantité d'agents de cristallisation telle que leur concentration dans la solution aqueuse sursaturée de percarbonate de sodium soit supérieure à 0,1 g/l et le plus souvent comprise entre environ 0,5 g/l et environ 2,7 g/l.

Des agents tensio-actifs anioniques peuvent également être utilisés pour maîtriser la cristallisation du percarbonate de sodium. Ces agents sont introduits de préférence au niveau de la zone d'introduction de la suspension ou solution de carbonate de sodium. Les agents tensio-actifs anioniques contenant au moins une fonction sulfate ou sulfonate rattachée a une chaine hydrocarbonée sont particulièrement préférés. On utilise en général une quantité d'agents tensio-actif telle que leur concentration dans les eaux-mères soit supérieure a 0,1 g/l et le plus souvent comprise entre environ 0,7 g/l et 1 g/l. L'oléate d'isobutyl sulfate est avantageusement choisi parmi les tensio-actifs.

Pour abaisser la solubilité du percarbonate de sodium, on peut également utiliser des agents de relargage tels que les sels de sodium. Le chlorure de sodium est particulièrement préféré. La quantité d'agents de relargage utilisée est telle que leur concentration dans les eaux-mères soit supérieure à 20 g par litre et de préférence comprise entre environ 70 g/l et environ 170 g/l.

L'introduction en continue du peroxyde d'hydrogène dans la suspension solide-liquide est assurée par une solution aqueuse de peroxyde d'hydrogène de concentration en poids comprise entre environ 35 % et environ 70 %. La solution aqueuse de peroxyde d'hydrogène peut contenir en outre du carbonate de sodium, des agents stabilisants, notamment le silicate de sodium, le sulphate de magnésium et des agents de relargage tel que le chlorure de sodium.

L'introduction en continue de carbonate de sodium dans la suspension solide-liquide est assurée par une suspension ou solution aqueuse concentrée de carbonate de sodium, dont le titre est supérieur à 10 % et de préférence compris entre environ 15 % et environ 24 %, contenant éventuellement du percarbonate de sodium en solution ou en suspension. La solution concentrée de carbonate de sodium peut être préparée par dissolution du carbonate de sodium commercial dans l'eau ou dans une partie ou la totalité de la solution retirée de la suspension solide-liquide au terme de son déplacement ascendant, à une température supérieure à 17°C. La température de dissolution est de préférence comprise entre environ 30°C et environ 70°C.

Tout type de carbonate de sodium ayant une teneur en fer (Fe) inférieure à 10 ppm peut convenir. On utilise de préférence du carbonate de sodium anhydre en provenance de chez SOLVAY ou RHONE-POULENC.

La suspension ou solution concentrée de carbonate de sodium peut contenir en outre des agents stabilisants comme notamment le silicate de sodium ou le sulfate de magnésium, des agents de relargage comme le chlorure de sodium et des agents de cristallisation comme l'hexamétaphosphate de sodium

L'état d'agitation de la suspension solide-liquide auquel participe la vitesse ascensionnelle du liquide est assuré par un agitateur à pales ou à hélice ou en forme d'échelle de perroquet. Cette agitation doit être telle que l'état même de suspension et l'effet de classement granulométrique soient assurées et que les petits cristaux de percarbonate de sodium soient maintenus suffisamment longtemps en position de contact ou dans une proximité suffisante nécessaire à leur agglomération.

La vitesse linéaire ascensionnelle du liquide dans la partie cylindrique du réacteur, peut être réglée entre environ 2 m/h et environ 20 m/h. On utilise avantageusement une vitesse linéaire ascensionnelle comprise entre environ 3 m/h et environ 10 m/h On entend par vitesse linéaire ascensionnelle, le rapport entre le débit de fluidisation et la section du réacteur.

La température de la suspension solide-liquide est comprise entre environ 14 et environ 20°C. Elle est réglée avec précision à l'aide d'un ou plusieurs échangeurs thermiques en parallèle. Une température de la suspension solide-liquide voisine de 17°C est particulièrement préférée et elle est avantageusement régulée à 1°C près.

Au terme du déplacement ascensionnel de la suspension solide-liquide, on peut éventuellement séparer la matière solide du liquide par des techniques classiques telles que décantation, filtration ou en mettant en oeuvre un hydrocyclone.

Une partie ou la totalité de ce liquide, sépare ou non de la matière solide, des eaux-mères résultant de la séparation des agglomérats fabriqués du liquide retiré avec eux, et éventuellement de l'eau, constituent normalement le flux liquide entrant au bas du réacteur dans lequel se forment les agglomérats selon l'invention.

Selon la présente invention, on peut utiliser un réacteur colonne ou un réacteur de forme cylindroconique muni ou non d'une collerette sur sa partie supérieure. On utilise le plus souvent un réacteur cylindroconique et de préférence un réacteur cylindroconique muni d'une collerette.

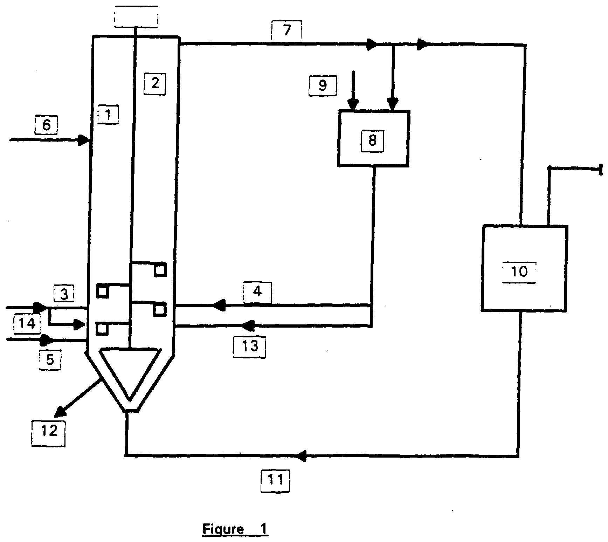

La figure 1 illustre schématiquement un exemple de réalisation du procédé de fabrication du percarbonate de l'invention.

Sur le schéma de la figure1, 1 désigne un réacteur cylindroconique et 2 l'agitateur dont ce réacteur est muni; 3 et 14 désignent l'amenée dans le réacteur 1 d'une solution aqueuse de peroxyde d'hydrogène contenant les agents stabilisants, 4 et 13 celles d'une solution de carbonate de sodium contenant du silicate de sodium et éventuellement du percarbonate en solution ou suspension; 5 désigne l'amenée d'agent tensio-actif anionique dans le réacteur 1, 6 celle d'agent de cristallisation; 7 désigne la conduite par laquelle le liquide contenant éventuellement de la matière solide quitte le réacteur en fin de parcours ascensionnel; 8 désigne le récipient dans lequel le carbonate de sodium commercial, introduit par l'arrivée 9, est dissous dans une partie du liquide provenant de la conduite 7; 10 désigne le bac de surverse dans lequel l'autre partie du liquide provenant de la conduite 7 est retenue avant d'être introduite au bas du réacteur par la conduite 11. 12 désigne la sortie du liquide contenant les agglomérats de percarbonate de sodium. Ces agglomérats sont ensuite isolés du liquide ou eaux-mères les renfermant par essorage à l'aide d'une essoreuse centrifuge puis séchés dans un lit fluidisé à une température comprise entre environ 40 et environ 70°C, de préférence entre environ 50 et environ 60°C. Les eaux-mères récupérées a la sortie de l'essoreuse peuvent être réintroduites dans le bac de surverse 10.

### Exemple 1

On opère selon le schéma de procédé de la figure 1.

Le réacteur cylindroconique 1 a une hauteur totale (parties cylindrique et conique) égale à 51 cm; sa partie cylindrique a une hauteur égale à 43 cm et un diamètre égal à 10 cm; il est muni d'une collerette, de 13 cm de hauteur, dans sa partie supérieure (non figurée sur le schéma) et est principalement équipé de l'agitateur 2, d'injecteurs d'introduction des solutions aqueuses de peroxyde d'hydrogène, de carbonate de sodium, d'agents tensio-actif et de cristallisation.

On amorce l'opération en introduisant 760 g de cristaux de percarbonate de sodium de densité égale à 0,75 g/cm3, préalablement préparés, dans le réacteur 1 contenant une eau-mère à (% massique) :
- 7,2 % de carbonate de sodium
- 3,48 % d'une solution de peroxyde d'hydrogène à 70 %
- 7,2 % de chlorure de sodium
- 0,13 % de l'oléate d'isobutyl sulfate
- 500 ppm d'hexametaphosphate de sodium (PROLABO RECTAPUR)
- 495 ppm de silicate de sodium
- 99 ppm de sulphate de magnésium

On introduit ensuite en continu dans le réacteur 1, agité à 70 tours/min, par 3 et par 14, au total environ 550 cm³/h de la solution aqueuse de peroxyde d'hydrogène (titre voisin de 70 %) contenant 5 % de chlorure de sodium et 70 ppm de sulfate de magnésium,
par 4 et 13 - au total- 6,1 l/h de la solution concentrée de carbonate de sodium a 17- 19 % en poids,
par 5 - 12,4 g/h de l'oléate d'isobutyl sulfate,
par 6 - 20 cm³/h de la solution d'hexametaphosphate de sodium a 24,7 % massique.

Au cours de l'essai on ajuste, s'il en est besoin, le débit de la solution aqueuse de peroxyde d'hydrogène de façon à assurer un rapport molaire peroxyde d'hydrogène/carbonate de sodium dissous dans les eaux-mères, au terme du déplacement ascendant de la solution aqueuse sursaturée, égal à 1,4.

La solution initiale de carbonate de sodium contient 20 % de carbonate de sodium, 7,2 % de chlorure de sodium, 800 ppm d'hexametaphosphate de sodium et 520 ppm de silicate de sodium.

La température dans le réacteur 1 est maintenue pratiquement entre 16,5°C et 17,5°C et celle dans le récipient 8 à environ 65°C.

On soutire dans le temps du réacteur 1, par 12, les agglomérats de percarbonate de sodium fabriqués et accompagnés de l'eau-mère. Ces agglomérats sont séparés par essorage dans une centrifugeuse et ensuite séchés dans un lit fluidisé à 55°C. L'eau-mère récupérée au cours de l'essorage est renvoyée dans le bac de surverse 10.

Après la phase de mise en régime, la vitesse linéaire ascensionnelle est égale à 5 m/h dans la partie cylindrique du réacteur 1 et on soutire 40 l/h du liquide au terme de son mouvement ascensionnel.

Ces agglomérats ont une masse volumique apparente égale à 0,94 g/cm³.

La teneur en oxygène actif est de 14,6 %.

Le temps nécessaire pour dissoudre 90 % de 2 g de ces agglomérats dans un litre d'eau à 15°C est de 70 s.

La granulométrie moyenne de ces agglomérats est de 850 µm et est répartie comme suit:
< 160 µm = 1 %
160 - 480 µm = 9 %
480 - 750 µm = 27 %
750 - 1020 µm = 41 %
1020 - 1400 µm = 21 %
> 1400 µm = 1 %

La perte de poids après le test d'attrition suivant la norme ISO 5937 est inférieure à 1 %.

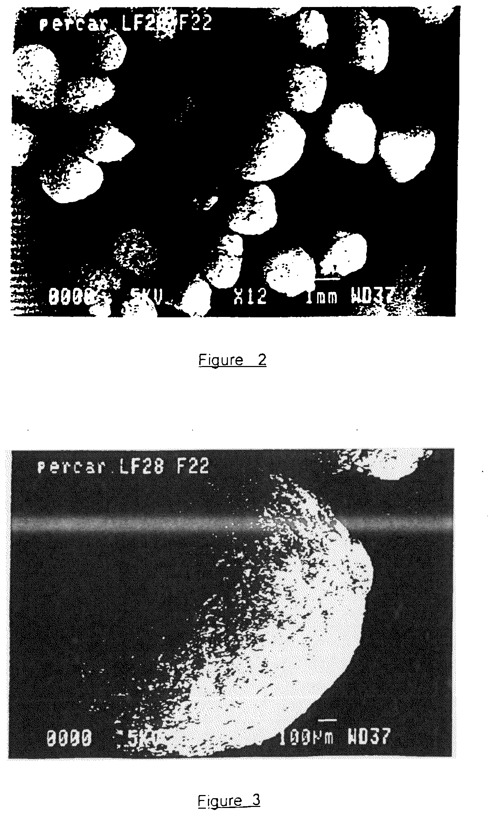

Les figures 2 et 3 montrent les clichés de ces agglomérats obtenus en microscopie électronique à balayage avec un grossissement de 12 et de 50 respectivement.

### Exemple 2

On opère de la même manière comme à l'exemple 1 mais avec un rapport molaire peroxyde d'hydrogène/carbonate de sodium dissous dans les eaux- mères, au terme du déplacement ascendant de la solution aqueuse sursaturée, égal à 1,3.

La masse volumique apparente des agglomérats obtenus après l'essorage est de 0,9 g/cm3 et la granulométrie moyenne est de 830 µm.

Le temps nécessaire pour dissoudre 90 % de 2 g de ces agglomérats dans un litre d'eau à 15°C est de 65 secondes.

La perte de poids après le test d'attrition ISO 5937 est inférieure à 1 %.

### Exemple 3

On opère de manière identique à l'exemple 1 sauf que le débit d'alimentation du carbonate de sodium solide dans le récipient passe à 1000 g/h.

La masse volumique apparente des agglomérats obtenus après séchage est de 0,75 g/cm3 et la granulométrie moyenne est de 610 µm.

Le temps nécessaire pour dissoudre 90 % de 2 g de ces agglomérats dans 1 litre d'eau à 15°C est de 60 secondes.

La perte de poids après le test d'attrition ISO 5937 est inférieure à 2 %.

## Revendications

1. Percarbonate de sodium constitué d'agglomérats de petits cristaux, de taille comprise entre 1 et 100 µm, de percarbonate de sodium **caractérisé en ce que** :
a) la granulométrie moyenne de ces agglomérats est supérieure à 600 µm,
b) la masse volumique apparente de ces agglomérats est comprise entre 0,75 g/cm³ et 1,1 g/ cm³, et
c) la teneur en oxygène actif est supérieure à 14%.

2. Percarbonate de sodium selon la revendication 1 **caractérisé en ce que** le temps nécessaire pour dissoudre 90 % de 2 g d'agglomérats dans un litre d'eau à 15° C est inférieur à 90 secondes.

3. Percarbonate de sodium selon la revendication 2 **caractérisé en ce que** le temps nécessaire pour dissoudre 90 % de 2 g d'agglomérats dans un litre d'eau à 15° C est compris entre 40 et 70 secondes.

4. Percarbonate de sodium selon l'une quelconque des revendications 1 à 3 **caractérisé en ce que** la perte en fines, suivant le test d'attrition de la norme ISO 5937, est inférieure à 1 %.

5. Percarbonate de sodium selon l'une quelconque des revendications 1 à 4 **caractérisé en ce que** les agglomérats ont une granulométrie comprise entre 160 et 1400 µm.

6. Percarbonate de sodium selon l'une quelconque des revendications 1 à 5 **caractérisé en ce que** les petits cristaux ont une taille comprise entre 5 et 20 µm.

7. Percarbonate de sodium selon l'une quelconque des revendications 1 à 6 **caractérisé en ce que** la granulométrie moyenne des agglomérats est supérieure à 700 µm.

8. Percarbonate de sodium selon l'une quelconque des revendications 1 à 7 **caractérisé en ce que** le taux pondéral de fines de dimension inférieure à 160 µm présentes avec les agglomérats est inférieur à 2 %, de préférence inférieur à 1 %.

## Patentansprüche

1. Natriumpercarbonat, das aus Agglomeraten von kleinen Kristallen mit einer Größe zwischen 1 und 100 µm besteht, wobei das Natriumpercarbonat **dadurch gekennzeichnet ist, dass**:
a) die mittlere Korngröße dieser Agglomerate Größer als 600 µm ist,
b) die scheinbare Dichte dieser Agglomerate zwischen 0,75 g/cm³ und 1,1 g/cm³ liegt und
c) der Gehalt an aktivem Sauerstoff Größer als 14% ist.

2. Natriumpercarbonat gemäß Anspruch 1, **dadurch gekennzeichnet, dass** die Zeit, die erforderlich ist, um 90% von 2 g Agglomeraten in einem Liter Wasser bei 15 °C aufzulösen, kleiner als 90 Sekunden ist.

3. Natriumpercarbonat gemäß Anspruch 2, **dadurch gekennzeichnet, dass** die Zeit, die erforderlich ist, um 90% von 2 g Agglomeraten in einem Liter Wasser bei 15 °C aufzulösen, zwischen 40 und 70 Sekunden liegt.

4. Natriumpercarbonat gemäß einem der Ansprüche 1 bis 3, **dadurch gekennzeichnet, dass** der Verlust an Feinstoffen, gemäß dem Abrieb-Test der Norm ISO 5937, kleiner als 1% ist.

5. Natriumpercarbonat gemäß einem der Ansprüche 1 bis 4, **dadurch gekennzeichnet, dass** die Agglomerate eine Korngröße zwischen 160 und 1400 µm besitzen.

6. Natriumpercarbonat gemäß einem der Ansprüche 1 bis 5, **dadurch gekennzeichnet, dass** die kleinen Kristalle eine Größe zwischen 5 und 20 µm besitzen.

7. Natriumpercarbonat gemäß einem der Ansprüche 1 bis 6, **dadurch gekennzeichnet, dass** die mittlere Korngroße der Agglomerate größer als 700 µm ist.

8. Natriumpercarbonat gemäß einem der Ansprüche 1 bis 7, **dadurch gekennzeichnet, dass** der Gewichtsanteil an Feinstoffen mit einer Größe kleiner als 160 µm, die mit den Agglomeraten vorhanden sind, kleiner als 2%, vorzugsweise kleiner als 1% ist.

## Claims

1. Sodium percarbonate consisting of agglomerates of small crystals, of a size comprised between 1 and 100 µm, of sodium percarbonate, **characterized in that**:
a) the average particle size of these agglomerates is greater than 600 µm,
b) the apparent density of these agglomerates is between 0.75 g/cm³ and 1.1 g/cm³, and
c) the content of active oxygen is greater than 14%.

2. Sodium percarbonate according to Claim 1, **characterized in that** the time required to dissolve 90% of 2 g of agglomerates in one litre of water at 15°C is less than 90 seconds.

3. Sodium percarbonate according to Claim 2, **characterized in that** the time required to dissolve 90% of 2 g of agglomerates in one litre of water at 15°C is between 40 and 70 seconds.

4. Sodium percarbonate according to any one of Claims 1 to 3, **characterized in that** the loss of fines, according to the attrition test of ISO standard 5937, is less than 1%.

5. Sodium percarbonate according to any one of the Claims 1 to 4, **characterized in that** the agglomerates have a granulometry comprised between 160 and 1400 µm.

6. Sodium percarbonate according to any one of Claims 1 to 5, **characterized in that** the small crystals have a size comprised between 5 and 20 µm.

7. Sodium percarbonate according to any one of Claims 1 to 6, **characterized in that** the mean granulometry of the agglomerates is higher than 700 µm.

8. Sodium percarbonate according to any one of Claims 1 to 7, **characterized in that** the weight content of fines smaller 160 µm present with the agglomerates is less than 2%, preferably less than 1%.
